# EUROPEAN PATENT APPLICATION

(11) **EP 3 668 086 A1**
(43) Date of publication of application: **17.06.2020**
(21) Application number: 18211330.8
(22) Date of filing: 10.12.2018
(51) Int. Cl.: H04N 7/18

(54) **VIDEO DOOR ENTRY SYSTEM AND METHOD FOR MANAGING SUCH SYSTEM BY MEANS OF IMAGE RECOGNITION**

(71) Applicant: CAME S.p.A., 31030 Dosson di Casier (TV) (IT)
(72) Inventor: MILICI, Antonio, 33053 LATISANA (IT); CASONATO, Andrea, 33082 AZZANO DECIMO (IT)
(74) Representative: Savi, Massimiliano

(57) **Abstract**

The present invention relates to a video door entry system comprising at least one access station having a video acquisition unit of the analog type, adapted to acquire an image displayed by a calling person, at least one receiving station and a communication channel between the access station and the receiving station. The receiving station comprises means for the analog-digital conversion of the analog signals acquired by said video acquisition unit, digital data processing means for generating digital data corresponding to the image displayed by the calling person and storage means for storing digital data corresponding to default images. The receiving station further comprises comparison means adapted to compare the digital data in output from the processing means with the digital data of the storage means and the means for generating a signal with the outcome of the comparison made by the comparison means.

## Description

### FIELD OF THE INVENTION

The present invention relates to the construction of video door entry systems, in particular video door entry systems for multiple residential units or condominiums. In particular, the present invention relates to a video door entry system which integrates an image recognition system. The invention also relates to a method for managing such video door entry system.

### BACKGROUND ART

In the construction of video door entry systems, in particular in multiple residential units or condominiums, but also in single dwellings, the installation of an access station, conventionally associated with a main entrance, and of a receiving station, arranged in each dwelling or apartment, is known.

The access station conventionally comprises one or more call buttons, or bells, a microphone and a video camera for the video acquisition of the person making the call. The receiving station conventionally comprises a bell, a door entry system and a display for displaying the video image detected by the video camera, or possibly a video door entry system integrating the door entry system and the display.

Advanced video door entry systems integrate a facial recognition function for a controlled access by the system itself with regard to the person making the call.

Systems of the known type provide that the access station is equipped with a digital video camera, for the video acquisition of the person making the call, and an image processing unit. The processing unit comprises a facial recognition algorithm capable of compensating for interferences due to signal transmission and/or compensating for environmental variations, for example, changes in the illumination of the face depending on the time of day.

The access station therefore sends the processed signals to the receiving station of interest.

The access station is also capable of detecting the physiognomy of the face of the calling person, of comparing it with data stored in the access station itself, related to the physiognomy of the face of the persons qualified, and then of generating a signal or action to allow the opening of the access door.

However, the video door entry systems equipped with a known type of facial recognition system have some drawbacks.

A drawback of the systems of the known type is related to the constructive complexity of the access station due to the complexity of the video acquisition device and to the consequent software and/or hardware complexity.

This results in a high construction and/or installation cost.

Another drawback of the systems of the known type relates to the type of information stored in the access station related to personal data, such as the physiognomy of one or more persons, and therefore to the need to include appropriate hardware and/or software precautions so as to avoid any breach of sensitive data.

It is therefore the object of the present invention to overcome, at least partially, the drawbacks of the background art.

In particular, it is an object of the present invention to propose a video door entry system equipped with a recognition system having lower construction and/or installation costs with respect to systems of the known type.

It is another object of the present invention to propose a video door entry system equipped with a recognition system which may be installed for upgrading all or part of existing video door entry systems lacking a recognition system.

### SUMMARY

The present invention, in a first aspect thereof, therefore relates to a video door entry system comprising:
- at least one access station having a video acquisition unit of the analog type adapted to acquire an image displayed by a calling person;
- at least one receiving station;
- a communication channel between said access station and said receiving station for communicating analog signals acquired by said video acquisition unit to said receiving station;
in which said receiving station comprises:
- means for the analog-digital conversion of said analog signals acquired by said video acquisition unit;
- digital data processing means for generating digital data corresponding to the image displayed by said calling person;
- storage means for storing digital data corresponding to one or more default images;
- comparison means adapted to compare the digital data in output from said processing means, corresponding to the image displayed by said calling person, with said digital data of said storage means, corresponding to one or more default images;
- means for generating a signal with the outcome of the comparison made by said comparison means.

In a preferred embodiment, the image displayed is the face of the calling person and the digital data corresponding to one or more default images comprise digital data corresponding to the physiognomy of the face of one or more persons.

In another preferred embodiment, the image displayed comprises a visual ID code associated with the calling person, preferably a bar code or a QR code, and said digital data corresponding to one or more default images comprise digital data corresponding to one or more images comprising one or more visual ID codes associated with respective one or more persons.

In a preferred embodiment, the access station further comprises an entrance door with a controllable opening and the outcome signal comprises a signal for controlling the opening of the entrance door.

According to a preferred embodiment of the invention, the access station comprises calling means, preferably a call button.

In a preferred embodiment, the access station comprises movement detection means for detecting the presence of the calling person.

Preferably, the access station comprises signaling means, more preferably audio and/or video means.

In a preferred embodiment, the communication channel comprises one or more cables, preferably twisted two-wire cables.

According to a preferred embodiment of the invention, the receiving station comprises signaling means, preferably audio and/or video means.

Preferably, the receiving station comprises setting operations input means.

In a preferred embodiment, the input means allow the insertion and the storage of said digital data corresponding to one or more default images.

According to a preferred embodiment of the invention, the system comprises at least two of said access stations and comprises an analog signal distribution module between the access stations and the communication channel.

The present invention, in a second aspect thereof, relates to a method for managing a video door entry system comprising:
- at least one access station having a video acquisition unit of the analog type adapted to acquire an image displayed by a calling person;
- at least one receiving station;
- a communication channel between said access station and said receiving station for communicating analog signals acquired by said video acquisition unit to said receiving station;
in which the method comprises the following steps:
- acquiring an analog signal of an image displayed by a calling person from said video acquisition unit of said access station;
- sending said analog signal to said receiving station by means of said communication channel;
- converting into digital data, in said receiving station, said analog signal acquired by said video acquisition unit coming from said communication channel;
- processing said converted digital data for generating digital data corresponding to the image displayed by said calling person;
- comparing said digital data, converted into the image displayed by said calling person, with the digital data stored in said receiving station, corresponding to one or more default images;
- generating a signal with the outcome of said comparison.

In a preferred embodiment, the image displayed is the face of the calling person and the digital data corresponding to one or more default images comprise digital data corresponding to the physiognomy of the face of one or more persons.

In another preferred embodiment, the image displayed comprises a visual ID code associated with the calling person, preferably a bar code or a QR code, and said digital data corresponding to one or more default images comprise digital data corresponding to one or more images comprising one or more visual ID codes associated with respective one or more persons.

Preferably, the outcome signal comprises a signal for the opening of an entrance door.

The present invention, in a third aspect thereof, relates to a receiving station for a video door entry system, in which the station comprises:
- means for the analog-digital conversion of analog signals related to a video acquisition;
- digital data processing means for generating digital data corresponding to an image;
- storage means for storing digital data corresponding to one or more default images;
- comparison means adapted to compare the digital data in output from said processing means, corresponding to the image displayed, with said digital data of said storage means, corresponding to one or more default images;
- means for generating a signal with the outcome of the comparison made by said comparison means.

In a preferred embodiment, the image displayed is the face of the calling person and the digital data corresponding to one or more default images comprise digital data corresponding to the physiognomy of the face of one or more persons.

In another preferred embodiment, the image displayed comprises a visual ID code associated with the calling person, preferably a bar code or a QR code, and said digital data corresponding to one or more default images comprise digital data corresponding to one or more images comprising one or more visual ID codes associated with respective one or more persons.

In a preferred embodiment, the receiving station comprises signaling means, preferably audio and/or video means.

Preferably, the receiving station comprises setting operations input means.

According to a preferred embodiment of the invention, the input means allow the insertion and the storage of said digital data corresponding to one or more default images.

### BRIEF DESCRIPTION OF THE DRAWINGS

To better understand the features and advantages of the invention, non-limiting examples of practical embodiments thereof are described below with reference to the attached drawings in which corresponding or equivalent features and/or component parts of the present invention are identified by the same reference numerals. In particular, in the Figures:
- Figure 1 shows a diagrammatic view of a door entry system according to a preferred embodiment of the present invention;
- Figure 2 shows a first enlarged detail of the system of Figure 1;
- Figure 3 shows a second enlarged detail of the system of Figure 1;
- Figure 4 shows a third enlarged detail of the system of Figure 1;
- Figure 5 shows a first embodiment variant of the system of Figure 1;
- Figure 6 shows another embodiment variant of the system of Figure 1.

### DETAILED DESCRIPTION OF THE INVENTION

Although the present invention is described below with reference to the preferred embodiments thereof depicted in the drawings, the present invention is not limited to the embodiments described below and depicted in the drawings. On the contrary, the embodiments described and depicted clarify some aspects of the present invention, the scope of which is defined by the claims.

The present invention has proved particularly advantageous with reference to the construction of a video door entry system in multiple residential units, or condominiums, which integrates an image recognition system, in particular the recognition of the physiognomy of the face (or facial recognition).

It should however be pointed out that the present invention is not limited to the construction of a video door entry system in condominiums. On the contrary, the present invention finds convenient application in all cases in which access to an entrance provided with a closure/door is required, in a controlled manner, on the basis of the recognition of an image displayed by the calling person, in particular, on the basis of a facial recognition of the calling person.

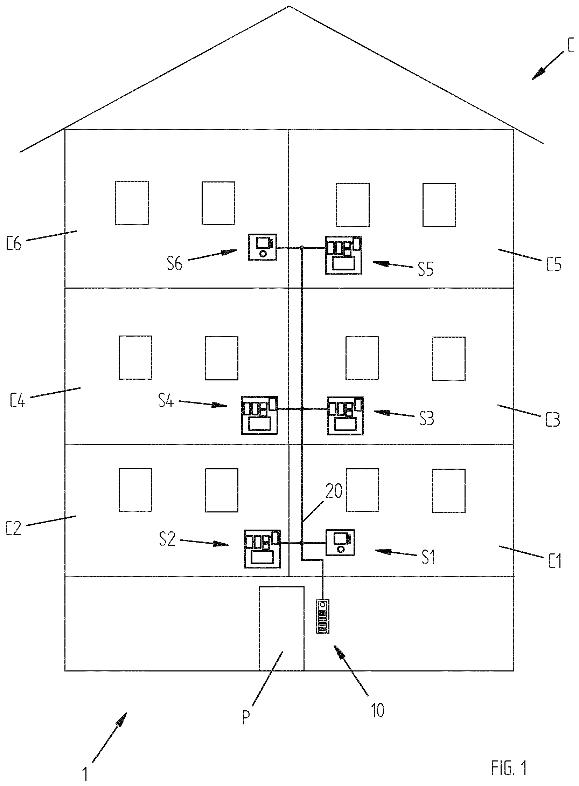

Figure 1 shows a preferred embodiment of a door entry system 1 object of the present invention which integrates, in particular, a facial recognition system.

The video door entry system 1 shown in Figure 1 is preferably and advantageously installed in a multiple residential unit C, hereinafter simply referred to by the term condominium.

By way of explanation, the condominium C shown consists of 6 dwelling units, hereinafter simply referred to as apartments C1÷C6.

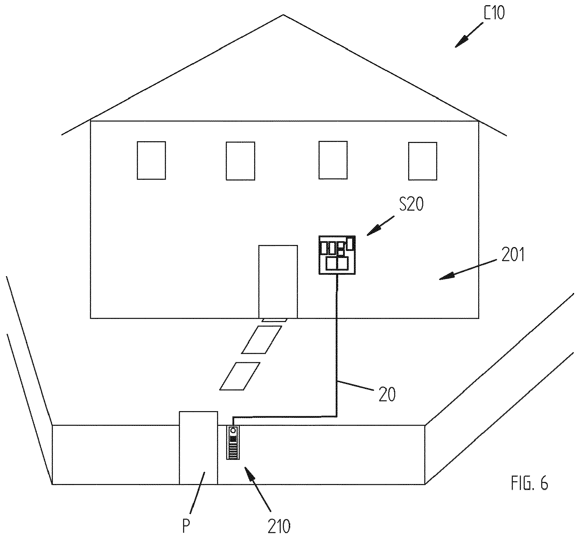

It is evident that in embodiment variants the number of residential units and/or dwelling units may be anyone, even including a single dwelling unit as shown for example in the embodiment variant of Figure 6.

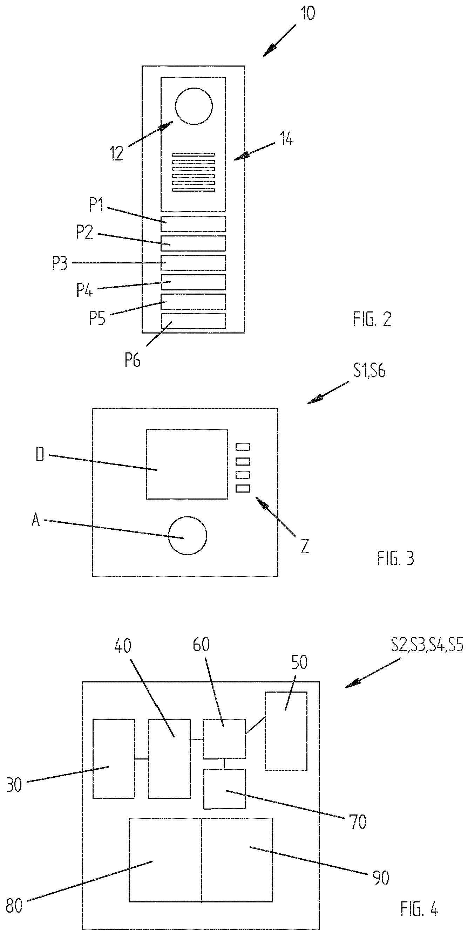

The video door entry system 1 comprises an access station 10, better shown in Figure 2.

The access station 10 is positioned at the point of access to the condominium C; in the case shown herein, a common entrance door P, where a person who wants to have access to one of the apartments C1÷C6 would place him or herself. In the simplest case, the person who arrives at the access station 10 is an inhabitant of one of the apartments C1÷C6 or, in other cases and more generally, a person authorized to enter one of the apartments C1÷C6, as better described below. According to an aspect of the present invention, the access station 10 comprises a video acquisition unit of the analog type 12, or a video camera.

In particular, the analog video camera 12 is adapted to acquire images which are positioned frontally within the visual field thereof, and in particular the face of a person placed frontally within the visual field thereof.

The analog video camera 12 preferably comprises a video sensor capable of automatically compensating the exposure of the subject and possibly a lighting system (illumination) capable of making the illumination of the face of the person positioned in front of the video camera itself as homogeneous and constant as possible over time.

The access station 10, preferably, further comprises call buttons P1÷P6, one for each apartment C1÷C6, one of which is operated by the person requesting access to the desired apartment.

Furthermore, the access station 10 preferably comprises a microphone 14 and a loudspeaker 16 which may be used for the possible communication between the person requesting access and a person inside the called apartment C1÷C6.

The video door entry system 1 comprises six receiving stations S1÷S6.

Each receiving station S1÷S6 is positioned inside a respective apartment C1÷C6. A communication channel 20 connects the access station 10 and the receiving stations S1÷S6 for communicating analog signals acquired by the video acquisition unit 12 to the receiving stations S1÷S6.

In a preferred embodiment, the communication channel 20 comprises one or more cables, more preferably a twisted two-wire cable. In embodiment variants, the communication channel preferably comprises Ethernet cables (for example, CAT5 cables) in which only one pair of wires or flat telephone cables are used, the latter case being more suitable for shorter lengths.

In the exemplary embodiment shown herein, the receiving stations S1 and S6 associated with the apartments C1 and C6 are of the known type (better shown in Figure 3).

Therefore, such receiving stations S1 and S6 preferably comprise audio and/or video signaling means, such as, for example, a display D and a loudspeaker A. Such receiving stations S1 and S6, preferably, further comprise operating means Z, such as, for example, gate opening buttons, light switching buttons, video camera switching buttons, etc.

With regard to the video door entry system 1, in relation to the access station 10, the communication line 20 and the two receiving stations S1 and S6, it is substantially a system of the known type and commonly installed in condominiums.

According to an aspect of the present invention, however, one or more of the remaining receiving stations, in this case all four receiving stations S2÷S5, preferably comprise means for the analog-digital conversion 30 of the analog signals acquired by the video acquisition unit 12 of the access station 10 and coming from the communication line 20.

Subsequently, for simplicity of exposition, reference is made to a single S2 of such receiving stations S2÷S5 (better shown in Figure 4), meaning that what has been described for such receiving station S2 is applicable *mutatis mutandi* to the other three receiving stations S3÷S5.

The receiving station S2 then preferably comprises digital data processing means 40 for generating digital data corresponding to the physiognomy of the face of the calling person.

The digital data processing means 40 preferably comprise a central processing unit, equipped with a floating-point co-processor, RAM memories for storing temporary data and non-volatile memories for the permanent storage also of the digital data related to the physiognomy of the person whose face is to be recognized.

By way of explanation, a core processor architecture suitable for this type of processing may be that of a single or dual core Cortex-A9, with a system clock of at least 720MHz, equipped with a floating-point unit; RAMs may be DDR3 memories with a capacity of at least 256MBytes.

The receiving station S2 then preferably comprises storage means 50 for storing digital data corresponding to the physiognomy of the face of one or more persons. In particular, preferably, the storage means 50 comprise multiple memory areas, each adapted to store digital data corresponding to the physiognomy of the face of one or more persons which will be later identified as persons authorized to access and whose meaning is better explained below.

The receiving station S2 then preferably comprises comparison means 60 adapted to compare the digital data in output from the processing means 40, corresponding to the physiognomy of the face of the calling person, with the digital data of the storage means 50, corresponding to the physiognomy of the authorized persons. The receiving station S2 then preferably comprises means 70 for generating a signal with the outcome of the comparison made by the comparison means 60.

In a preferred embodiment, the outcome signal comprises a signal enabling the opening of the entrance door P.

In a preferred embodiment, the signal enabling the opening of the entrance door P is sent to a device for the controllable opening of said entrance door P, such as, for example, an electric lock or an electronic lock.

In a different preferred embodiment, the outcome signal comprises the generation of an acoustic or text signal on the access station 10 for the calling person.

In another different preferred embodiment, the outcome signal comprises an acoustic and/or text signal for a person already present inside the apartment C2.

In a preferred embodiment, the receiving station S2 then preferably comprises display means 80, such as, for example, a display.

The display means 80 preferably allow displaying the images acquired by the video camera 12 and/or other possible useful data, for example the text notifications relating to the outcome of the comparison itself.

It should be noted that the analog-digital conversion means 30, the digital data processing means 40, the storage means 50, the comparison means 60 and the generation means 70 are diagrammatically shown in the Figures as separate blocks.

It is evident that in the actual embodiment, one or more of said means may be integrated into one or more electronic devices, according to what is known to the skilled in the art.

In a preferred embodiment, the receiving station S2 then preferably comprises input means 90 for entering data by an operator, conventionally the user inhabiting the apartment or the installer of the system.

By means of the input means 90, the user performs the various operations for setting the system 1.

In a preferred embodiment, among the various setting operations, the user performs an operation for storing, in the memory areas of the storage means 50, the digital data corresponding to the physiognomy of the face of one or more authorized persons, preferably by means of the setting procedure better described below.

Other setting operations may comprise known operations, such as, for example, the type of ring, the volume thereof, the displaying features of the display 80, etc. In a preferred embodiment, the input means 90 may be associated with the display means 80, for example, in case of using a touch screen display.

With reference to Figures 1 to 4, a possible use of the system 1 in accordance with the invention will be described below.

The employment of the system 1 in accordance with the invention first requires that a setting operation is performed in the receiving station S2÷S5 for storing, in at least one memory area of the storage means 50, the digital data corresponding to the physiognomy of at least one authorized person, for example, the inhabitant of one of the apartments C2÷C5.

Such setting operation preferably comprises the following steps:
- the receiving station S2 is set into setting mode (reference will be made below to the station S2 and to the corresponding apartment C2);
- the person to be authorized, for example, one of the inhabitants of the apartment C2, faces the video camera 12 of the access station 10;
- the analog-digital conversion means 30 of the receiving station S2 convert the analog signal coming from the video camera 12;
- the digital data processing means 40 generate digital data corresponding to the physiognomy of the face of the person to be authorized and such data are stored in a memory area of the storage means 50.

Such setting operation will be performed for all the persons who will be authorized to access the apartment C2 and the various memory areas of the storage means 50 will be gradually filled with the corresponding digital data.

Once at least one setting operation has been performed, the system 1 will be ready for the normal use thereof, which will preferably comprise the following steps:
- the calling person at the entrance door P who wants to access an apartment faces the video camera 12 and makes a call, for example, by means of the corresponding call button P2, to the apartment of interest C2 (reference will be made below to apartment C2);
- the video camera 12 acquires the analog signal of the face of the calling person;
- the analog signal is sent to the receiving station S2 by means of the communication channel 20;
- the analog-digital conversion means 30 of the receiving station S2 convert the analog signal;
- the digital data processing means 40 process the converted digital data to generate the digital data corresponding to the physiognomy of the face of the calling person;
- the comparison means 60 compare the converted digital data, corresponding to the physiognomy of the face of the calling person, with the digital data stored in the memory areas of the storage means 50, i.e., related to the authorized persons;
- if there is a correspondence between the digital data corresponding to the physiognomy of the face of the calling person and one of the digital data stored in the memory areas related to the authorized persons, a signal with the positive outcome of such comparison is generated (or else, otherwise, a signal with the negative outcome).

In the case of a positive outcome, the receiving station S2 preferably proceeds to send a signal for the opening of the entrance door P.

In a different preferred embodiment, following a positive or negative outcome, the receiving station S2 generates an acoustic or text signal to be sent to the access station 10 for the calling person.

In the procedure described above, it is not required for anyone to be present inside the apartment C2, as it is not required for anything to be displayed on the receiving station S2 (which may in fact be lacking the display means 80).

In an embodiment variant, following the positive or negative outcome of the comparison, the receiving station S2 may for example emit an acoustic signal and/or display a text message for a person already present inside the apartment C2 which may then carry out a particular action (for example, open the entrance door P).

From what has been described above, it is clear how the system in accordance with the invention allows the use of an analog access station, therefore of a medium-low price range, made with cheap video acquisition devices (video camera) while allowing the end user to use the facial recognition function to control the access controlled by the video door entry system. In fact, in accordance with the invention, the operations for digitizing the image, as well as the data processing, are delegated to the receiving station/s in the house of the user who wishes to implement this function, rather than directly to the access station, which would require high computational capabilities (with higher construction costs). Furthermore, advantageously, in situations as those described above with the presence of multiple dwelling units, only the users who desire the facial recognition function need to install the receiving station with the described innovative features (and therefore with an own cost), while the other users may maintain low-cost receiving stations (as shown, for example, for the receiving stations S1 and S6 of the apartments C1 and C6).

This gives a high flexibility and the possibility to intervene to upgrade all, or even part (for the users who desire it), of an existing video door entry system lacking a facial recognition function.

A further advantageous aspect of the present invention consists in that the information related to personal data, such as the physiognomy of one or more persons, reside in the receiving station and therefore in a private device and not, for example, in the access station or other common parts of the system. Therefore, potential data privacy issues are overcome

It should be noted that in the preferred embodiment previously shown and described, the access station is preferably provided with a call button to enable the calling person to make the call.

In a preferred embodiment variant, the call button and the relevant call action may be eliminated. In such embodiment, the video acquisition unit (video camera) may always be active and thus continuously detect the images. When the calling person faces the video camera, the system proceeds to the authentication, as described. Alternatively, the video acquisition unit (video camera) may remain in stand-by mode and be activated only in the case of a person facing it, for example, by using a motion sensor.

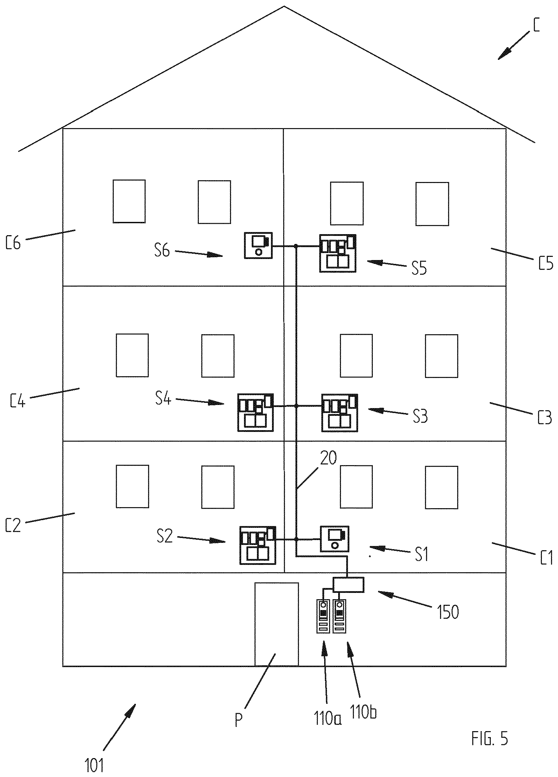

With reference to Figure 5, an embodiment variant of the system 101 in accordance with the invention is shown.

Such embodiment differs from the first embodiment described in Figure 1 in that it comprises multiple access stations 110a, 110b, in this case two access stations, which refer, for example, to a first group of users C1, C3 and C5 and a second group of users C2, C4 and C6 related to a staircase A and a staircase B of the condominium C.

The two access stations 110a, 110b are preferably interfaced with the communication channel 20, or communication bus, by means of an analog signal distribution module 150, preferably video and/or audio and/or signaling signals. The distribution module 150 allows the analog communication between the users C1÷C6 and the access stations 110a, 110b.

The operation and/or the advantages of such embodiment are the same as those described above for the first embodiment.

With reference to Figure 6, another embodiment variant of the system 201 in accordance with the invention is shown.

Such embodiment differs from the embodiments described above in that the system 201 is installed in a single dwelling unit C10 in which a single access station 210 and a single receiving station S20 are included.

The operation and the advantages of such embodiment are the same as those described above for the first embodiment.

Although the present invention has been described in the embodiments thereof with particular reference to the image of the face of the calling person and the corresponding physiognomy, it should be noted that the present invention is not exclusively limited to the face of the person but is applicable to all those images which may be displayed by the calling person and which may uniquely identify the person him or herself. It is clear that the face of the calling person uniquely identifies the person himself, but in embodiment variants the calling person may display an image comprising a personal visual ID code instead of the face thereof, such as, for example, a bar code or a QR code.

What has been described above with reference to the face and the physiognomy of the face of the calling person, may apply *mutatis mutandi* to an image comprising a visual ID code which is displayed by the calling person.

Obviously, the receiving station will be suitably designed to allow the processing of signals and/or data not expressly referring to the physiognomy of the face. Preferably, said digital data processing means 40 of the receiving station will be adapted to generate digital data corresponding to the image comprising the visual ID code associated with the calling person, rather than digital data corresponding to the physiognomy of the face of the calling person.

Similarly, said storage means 50 of the receiving station will be adapted to store digital data corresponding to images comprising visual ID codes associated with one or more authorized persons, rather than digital data corresponding to the physiognomy of the face of one or more authorized persons.

Similarly, said comparison means 60 of the receiving station will be adapted to compare the digital data in output from the processing means 40 corresponding to the image comprising the visual ID code associated with the calling person and the digital data of the storage means 50 corresponding to images comprising visual ID codes associated with one or more authorized persons.

Also the aforesaid setting operations by the user will be performed by storing the digital data corresponding to images comprising visual ID codes associated with one or more persons to be authorized in the memory areas of the storage means 50.

During such procedure, the person to be authorized, rather than placing his or her face in front of the video camera of the access station, shall place the image comprising the personal visual ID code (for example, a personal bar code or a personal QR code).

It has therefore been proven, by means of the present description, that the door entry system according to the present invention allows to achieve the intended objects. In particular, the door entry system according to the present invention has lower construction and/or installation costs with respect to the systems of the known type.

Although the present invention has been previously clarified by means of the detailed description of some embodiments depicted in the drawings, the present invention is not limited to the embodiments previously described and depicted in the drawings; on the contrary, further variants of the embodiments described are within the scope of the present invention, scope defined by the claims.

## Claims

1. A video door entry system (1; 101; 201) comprising:
- at least one access station (10; 110a, 110b; 210) having a video acquisition unit (12) of the analog type adapted to acquire an image displayed by a calling person;
- at least one receiving station (S2÷S5; S20);
- a communication channel (20) between said access station (10; 110a, 110b; 210) and said receiving station (S2÷S5; S20) for communicating analog signals acquired by said video acquisition unit (12) to said receiving station (S2÷S5; S20); **characterized in that** said receiving station (S2÷S5; S20) comprises:
- means for the analog-digital conversion (30) of said analog signals acquired by said video acquisition unit (12);
- digital data processing means (40) for generating digital data corresponding to the image displayed by said calling person;
- storage means (50) for storing digital data corresponding to one or more default images;
- comparison means (60) adapted to compare the digital data in output from said processing means (40), corresponding to the image displayed by said calling person, with said digital data of said storage means (50), corresponding to one or more default images;
- means for generating (70) a signal with the outcome of the comparison made by said comparison means (60).

2. A system (1; 101; 201) according to claim 1, **characterized in that** said image displayed is the face of said calling person and **in that** said digital data corresponding to one or more default images comprise digital data corresponding to the physiognomy of the face of one or more persons.

3. A system (1; 101; 201) according to claim 1, **characterized in that** said image displayed comprises a visual ID code associated with said calling person, preferably a bar code or a QR code, and **in that** said digital data corresponding to one or more default images comprise digital data corresponding to one or more images comprising one or more visual ID codes associated with respective one or more persons.

4. A system (1; 101; 201) according to any one of the preceding claims, **characterized in that** said access station (10; 110a, 110b; 210) further comprises an entrance door (P) with a controllable opening and said outcome signal comprises a signal for controlling the opening of said entrance door.

5. A system (1; 101; 201) according to any one of the preceding claims, **characterized in that** said access station (10; 110a, 110b; 210) comprises calling means (P1÷P6), preferably a call button (P1÷P6).

6. A system (1; 101; 201) according to any one of the preceding claims, **characterized in that** said access station (10; 110a, 110b; 210) comprises movement detection means for detecting the presence of said calling person.

7. A system (1; 101; 201) according to any one of the preceding claims, **characterized in that** said access station (10; 110a, 110b; 210) comprises signaling means, preferably audio (16) and/or video means.

8. A system (1; 101; 201) according to any one of the preceding claims, **characterized in that** said communication channel (20) comprises one or more cables, preferably twisted two-wire cables.

9. A system (1; 101; 201) according to any one of the preceding claims, **characterized in that** said receiving station (S2÷S5; S20) comprises signaling means, preferably audio (A) and/or video means (D).

10. A system (1; 101; 201) according to any one of the preceding claims, **characterized in that** said receiving station (S2÷S5; S20) comprises setting operations input means (90).

11. A system (1; 101; 201) according to claim 10, **characterized in that** said input means (90) allow the insertion and the storage of said digital data corresponding to one or more default images.

12. A system (101) according to any one of the preceding claims, **characterized in that** it comprises at least two of said access stations (110a, 110b) and **in that** it comprises an analog signal distribution module (150) between said access stations (110a, 110b) and said communication channel (20).

13. A method for managing a video door entry system (1; 101; 201) comprising:
- at least one access station (10; 110a, 110b; 210) having a video acquisition unit (12) of the analog type adapted to acquire an image displayed by a calling person;
- at least one receiving station (S2÷S5; S20);
- a communication channel (20) between said access station (10; 110a, 110b; 210) and said receiving station (S2÷S5; S20) for communicating analog signals acquired by said video acquisition unit (12) to said receiving station (S2÷S5; S20); **characterized in that** it comprises the following steps:
- acquiring an analog signal of an image displayed by a calling person from said video acquisition unit (12) of said access station (10; 110a, 110b; 210);
- sending said analog signal to said receiving station (S2÷S5; S20) by means of said communication channel (20);
- converting into digital data, in said receiving station (S2÷S5; S20), said analog signal acquired by said video acquisition unit (12) coming from said communication channel (20);
- processing said converted digital data for generating digital data corresponding to the image displayed by said calling person;
- comparing said digital data, converted into the image displayed by said calling person, with the digital data stored in said receiving station (S2÷S5; S20), corresponding to one or more default images;
- generating a signal with the outcome of said comparison.

14. A method according to claim 13, **characterized in that** said image displayed is the face of said calling person and **in that** said digital data corresponding to one or more default images comprise digital data corresponding to the physiognomy of the face of one or more persons.

15. A method according to claim 13, **characterized in that** said image displayed comprises a visual ID code associated with said calling person, preferably a bar code or a QR code, and **in that** said digital data corresponding to one or more default images comprise digital data corresponding to one or more images comprising one or more visual ID codes associated with respective one or more persons.

16. A method according to any one of claims 13 to 15, **characterized in that** said outcome signal comprises a signal for the opening of an entrance door (P).

17. A receiving station (S2÷S5; S20) for a video door entry system (1; 101; 201); **characterized in that** it comprises:
- means for the analog-digital conversion (30) of analog signals related to a video acquisition;
- digital data processing means (40) for generating digital data corresponding to an image;
- storage means (50) for storing digital data corresponding to one or more default images;
- comparison means (60) adapted to compare the digital data in output from said processing means, corresponding to the image displayed, with said digital data of said storage means (50), corresponding to one or more default images;
- means for generating (70) a signal with the outcome of the comparison made by said comparison means (60).

18. A receiving station (S2÷S5; S20) according to claim 17, **characterized in that** said image displayed is the face of said calling person and **in that** said digital data corresponding to one or more default images comprise digital data corresponding to the physiognomy of the face of one or more persons.

19. A receiving station (S2÷S5; S20) according to claim 17, **characterized in that** said image displayed comprises a visual ID code associated with said calling person, preferably a bar code or a QR code, and **in that** said digital data corresponding to one or more default images comprise digital data corresponding to one or more images comprising one or more visual ID codes associated with respective one or more persons.

20. A receiving station (S2÷S5; S20) according to any one of claims 17 to 19, **characterized in that** said receiving station (S2÷S5; S20) comprises signaling means, preferably audio (A) and/or video means (D).

21. A receiving station (S2÷S5; S20) according to claim 13 or 14, **characterized in that** said receiving station (S2÷S5; S20) comprises setting operations input means (90).

22. A receiving station (S2÷S5; S20) according to any one of claims 17 to 21, **characterized in that** said input means (90) allow the insertion and the storage of said digital data corresponding to one or more default images.
